**Europäisches Patentamt**

**European Patent Office**

**Office européen des brevets**

(19)

(11) Veröffentlichungsnummer : **0 330 027 B1**

(12) # EUROPÄISCHE PATENTSCHRIFT

(45) Veröffentlichungstag der Patentschrift :
**08.04.92 Patentblatt 92/15**

(51) Int. Cl.$^5$ : **F16M 11/04**

(21) Anmeldenummer : **89102382.2**

(22) Anmeldetag : **11.02.89**

(54) Aufhängevorrichtung für Steuergeräte.

(30) Priorität : **22.02.88 DE 3805422**

(43) Veröffentlichungstag der Anmeldung :
**30.08.89 Patentblatt 89/35**

(45) Bekanntmachung des Hinweises auf die
Patenterteilung :
**08.04.92 Patentblatt 92/15**

(84) Benannte Vertragsstaaten :
**AT BE CH DE ES FR GB GR IT LI LU NL SE**

(56) Entgegenhaltungen :
**EP-A- 0 058 540**
**DE-A- 3 034 013**
**FR-A- 1 342 938**

(73) Patentinhaber : **Rittal-Werk Rudolf Loh GmbH
& Co. KG
Auf dem Stützelberg
W-6348 Herborn (DE)**

(72) Erfinder : **Reuter, Wolfgang
Dorfstrasse 16
W-5909 Burbach-Würgendorf (DE)**
Erfinder : **Debus, Jürgen
Am Ebersbach 50
W-6344 Dietzhölztal 1 (DE)**
Erfinder : **Lehr, Lothar
Dresseindorfer Strasse 16
W-5909 Burbach-Oberdresseindorf (DE)**

(74) Vertreter : **Vogel, Georg
Pat.-Ing. Georg Vogel Hermann-Essig-Strasse
35
W-7141 Schwieberdingen (DE)**

## Beschreibung

Die Erfindung betrifft eine Aufhängevorrichtung für Steuergeräte, die aus einem mit einer Wand oder einem Maschinenkörper verbindbaren Anschlußflansch oder Anschlußdrehgelenk, Tragarmabschnitten, Winkeln, Zwischengelenken und einer mit dem Steuergerät verbindbaren Kupplung zusammensetzbar ist, bei der die Tragarmabschnitte aus einem im wesentlichen U-förmigen Grund-Profilabschnitt und einem diesen verschließenden Deckelprofilabschnitt bestehen, wobei der Grund-Profilabschnitt mittels eines zu seinem Steg parallel verlaufenden Trennsteges in ein als geschlossenes Hohlprofil ausgebildetes Tragteil und ein dem Steg abgekehrt offenes U-förmiges Aufnahmeteil unterteilt ist, und bei der im Tragteil und im Aufnahmeteil längsgerichtete, durchgehende Verbindungsstege mit Schraubaufnahmen angeformt sind.

Mit dem Anschlußdrehgelenk, den Zwischengelenken und der Kupplung wird eine universelle Verschwenkbarkeit des am Ende der Aufhängevorrichtung angebrachten Steuergerätes erreicht. Mit den Winkeln wird ein Übergang von einem horizontalen zu einem vertikalen Tragarmabschnitt oder umgekehrt geschaffen. Dabei sind die Tragarmabschnitte unterschiedlich lang und von Profilsträngen abgelängte Bauteile.

Bei einer bekannten Aufhängevorrichtung ist der Tragarmabschnitt aus einem im wesentlichen U-förmigen Grund-Profilabschnitt und einem Deckelprofilabschnitt zusammengesetzt. Der Grund-Profilabschnitt ist mittels eines parallel zum Steg verlaufenden Trennsteges in ein als geschlossenes Hohlprofil ausgebildetes Tragteil und ein U-förmiges, dem Steg abgekehrt offenes Aufnahmeteil unterteilt. Außerdem sind sowohl im Tragteil, als auch im Aufnahmeteil längsgerichtete, durchgehende Verbindungsstege mit Schraubaufnahmen angeformt, so daß mit den Stirnseiten des Grund-Profilabschnittes leicht andere Teile der Aufhängevorrichtung verschraubt werden können. Der Deckelprofilabschnitt verschließt das Aufnahmeteil des Grund-Profilabschnittes und vervollständigt den Tragarmabschnitt. Das als geschlossenes Hohlprofil ausgebildete Tragteil verleiht dem Tragarmabschnitt eine ausgezeichnete Stabilität und in das offene, mit dem Deckelprofilabschnitt verschließbare Aufnahmeteil lassen sich die Verbindungsleitungen vom Steuergerät zur Maschine leicht einbringen. Das Steuergerät kann auch als Steuertafel oder dgl. ausgebildet sein.

Es ist Aufgabe der Erfindung, für eine Aufhängevorrichtung der eingangs erwähnten Art einen Winkel zu schaffen, der im Aufbau sehr einfach ist und senkrecht zueinander stehende Tragarmabschnitte so starr miteinander verbinden kann, daß die Eckverbindung große Belastungen abfangen kann, ohne daß das Einbringen der Verbindungsleitungen im Bereich des Winkels erschwert wird. Die eingebrachten Verbindungsleitungen sollen zudem im Bereich der Eckverbindung genau so geschützt werden können, wie in den Aufnahmeteilen der angrenzenden Tragarmabschnitte.

Diese Aufgabe wird nach der Erfindung dadurch gelöst, daß die Winkel aus einem Eckverbinder und einer Abdeckkappe bestehen, daß der Eckverbinder zwei im rechten Winkel zueinander stehende Befestigungsplatten mit Befestigungsschenkeln aufweist, die durch die auf den Stirnflächen der Seitenschenkel der Tragarmabschnitte aufliegenden Randbereichen der Befestigungsplatten gebildet werden und die auf der Seite, auf der die Befestigungsplatten einen rechten Winkel einschließen, mittels einer geneigten Verbindungsbrücke gegeneinander versteift sind, daß die Befestigungsschenkel jeweils auf der der Verbindungsbrücke abgekehrten Seite mittels Schrauben mit den Schraubaufnahmen der Verbindungsstege eines Tragarmabschnittes verbunden sind, daß auf den den Tragarmabschnitten zugekehrten Seiten der Befestigungsplatten Führungsplatten senkrecht abstehend angeformt sind, die in die Tragteile der Tragarmabschnitte einführbar sind und sich an den Innenseiten des Steges der Grund-Profilabschnitte abstützen, daß die Befestigungsplatten zumindest im Bereich des Aufnahmeteiles zwischen den Befestigungsschenkeln ausgespart sind, daß eine Abdeckkappe mit Seitenwänden den Winkel auf der Seite der Verbindungsbrücke abdeckt und teilweise die Seitenschenkel sowie mit den Tragarmabschnitten verbundene, das Aufnahmeteil verschließende Deckelprofilabschnitte überdeckt und daß eine die Seitenwände der Abdeckkappe verbindende Verbindungsleiste in dem Bereich, in dem die Tragarmabschnitte einen rechten Winkel einschließen, die Abdeckkappe am Winkel festlegt.

Der Eckverbinder sorgt für eine stabile starre Verbindung zwischen den im rechten Winkel zueinander stehenden Grund-Profilabschnitten der beiden Tragarmabschnitte der Eckverbindung. Dabei geben die Führungsplatten eine zusätzliche Abstützung und Versteifung der Eckverbindung. Die Aussparungen in den Befestigungsplatten lassen bei abgenommener Abdeckkappe das leichte Einbringen der Verbindungsleitungen zu, die vom Aufnahmeteil des einen Tragarmabschnittes, auf die Verbindungsbrücke des Eckverbinders aufgelegt, direkt in das Aufnahmeteil des anderen Tragarmabschnittes eingeführt werden können. Nach dem Verschließen der Aufnahmeteile mittels der Deckelprofilabschnitte wird die Abdeckkappe angebracht, so daß die Verbindungsleitungen auch im Bereich der Eckverbindung geschützt abgedeckt sind. Dabei hält die Abdeckkappe die Deckelprofilabschnitte zusätzlich an den Grund-Profilabschnitten der Tragarmabschnitte fest. Die Verbindungsbrücke dient dabei im Eckbereich zusätzlich zur Abstützung und Festlegung der Verbindungsleitungen.

Ist nach einer Ausgestaltung vorgesehen, daß sich die Verbindungsbrücke im mittleren Bereich nur über einen Teil der Breite der Befestigungsplatten erstreckt und daß die Befestigungsplatten in den von der Verbindungsbrücke überdeckten mittleren Bereichen so ausgespart sind, daß seitlich der Verbindungsbrücke lediglich die Befestigungsschenkel mit Befestigungsbohrungen für Schrauben mit der Verbindungsbrücke in Verbindung stehen, dann lassen sich auch in die Tragteile der Tragarmabschnitte eingefädelte Verbindungsleitungen über den Eckverbinder führen.

Damit über der Verbindungsbrücke des Eckverbinders ausreichend Platz für die Verbindungsleitungen vorhanden ist, sieht eine Ausgestaltung vor, daß die Verbindungsbrücke im Bereich der Befestigungsplatten mit den Stirnseiten der Trennstege der senkrecht zueinander stehenden, mit dem Eckverbinder verbundenen Grund-Profilabschnitte fluchten. Damit läßt sich der Querschnitt der Aufnahmeteile praktisch voll zur Aufnahme von Verbindungsleitungen ausnützen.

Die Abstützung des Eckverbinders in den angrenzenden Grund-Profilabschnitten der Tragarmabschnitte wird dadurch verbessert, daß die Führungsplatten mit seitlichen Abkantungen versehen sind, die sich an die Innenwandungen der Seitenschenkelabschnitte der Tragteile anlegen.

Die Festlegung der Abdeckkappe an der Eckverbindung wird nach einer Ausgestaltung so vorgenommen, daß die Verbindungsleiste sich auf der Seite der Eckverbindung, auf der die Tragarmabschnitte einen rechten Winkel einschließen, unter Zwischenlage von Dichtungsstreifen mit Anlageflächen an die Außenwandungen der Stege der Tragteile der Grund-Profilabschnitte und mit einer abgeflachten Kante an eine abgeschrägte Kante des Eckverbinders anlegt, daß die Abdeckkappe in den Seitenwänden mit Bohrungen und die Stirnseite der Verbindungsleiste mit Schraubaufnahmen versehen sind, und daß mittels Schrauben die Seitenwände der Abdeckkappe mit den Stirnseiten der Verbindungsleiste verschraubt sind.

Eine ausgezeichnete Schraubverbindung zwischen dem Eckverbinder und den Grund-Profilabschnitten der Tragarmabschnitte ergibt sich dadurch, daß die Verbindungsstege paarweise und aufeinander ausgerichtet an den einander gegenüberliegenden Innenwandungen der Seitenschenkelabschnitte von Tragteil und Aufnahmeteil der Grund-Profilabschnitte etwa in gleichem Abstand von dem Trennsteg angeordnet sind, und daß die Bohrungen in den Befestigungsschenkeln der Befestigungsplatten des Eckverbinders auf diese Anordnung und Verteilung der Verbindungsstege abgestimmt sind.

Der Eckverbinder wird vorzugsweise als Metall-Gußteil oder Metall-Spritzgußteil hergestellt.

Die Erfindung wird anhand eines in den Zeichnungen dargestellten Ausführungsbeispiels näher erläutert. Es zeigt:

Fig. 1 in perspektivischer Ansicht eine komplette Aufhängevorrichtung,

Fig. 2 in Explosionsdarstellung den Eckverbinder des Winkels mit zwei senkrecht zueinander stehenden Grund-Profilabschnitten von Tragarmabschnitten und

Fig. 3 in perspektivischer Darstellung die hergestellte Eckverbindung mit den Deckelprofilabschnitten der Tragarmabschnitte und der Abdeckkappe mit der Verbindungsleiste.

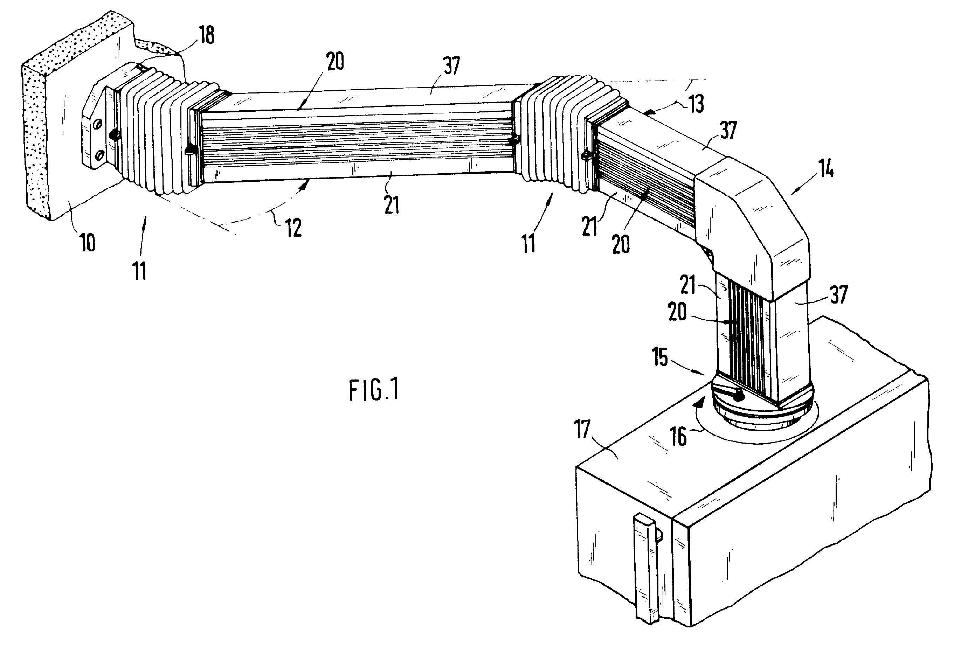

Mit 10 ist in Fig. 1 eine Wand oder ein Maschinenkörper angegeben, an der bzw. dem die als Tragarm ausgebildete Aufhängevorrichtung angebracht ist. Der Anschlußflansch 18 ist mit dem Teil 10 verbunden. Daran schließt sich ein Zwischengelenk 11 an, das mittels eines Faltenbalges abgedeckt ist. Der Anschlußflansch 18 und das Zwischengelenk 11 können auch als ein Anschlußdrehgelenk ausgebildet sein und eine Einheit darstellen. Daran schließt sich der erste horizontal ausgerichtete Tragarmabschnitt 20 an, der aus einem Grund-Profilabschnitt 21 und einem Deckelprofilabschnitt 37 besteht. Der Tragarmabschnitt 20 ist an dem Anschlußdrehgelenk verschwenkbar, wie der Schwenkwinkel 12 andeutet. An den Tragarmabschnitt 20 schließt sich über das mittels Faltenbalg abgedeckte Zwischengelenk 11 ein weiterer horizontaler Tragarmabschnitt 20 an, der schließlich über den Winkel 14 mit dem vertikalen Tragarmabschnitt 20 verbunden ist. Der Schwenkwinkel 13 deutet an, daß die beiden horizontalen Tragarmabschnitte 20 gegeneinander verschwenkbar sind. Das untere Ende des vertikalen Tragarmabschnittes 20 ist mit der Kupplung 15 verbunden, die das Steuergerät 17 trägt. Über die Kupplung 15 ist das Steuergerät 17 an dem vertikalen Tragarmabschnitt 20 verdrehbar, wie der Schwenkkreis 16 zeigt. Die Aufhängevorrichtung nach Fig. 1 stellt nur ein Ausführungsbeispiel dar. Die Tragarmabschnitte 20 haben unterschiedliche Länge. Die einzelnen Teile können auch in anderer Reihenfolge zu einer anderen Aufhängevorrichtung zusammengebaut sein.

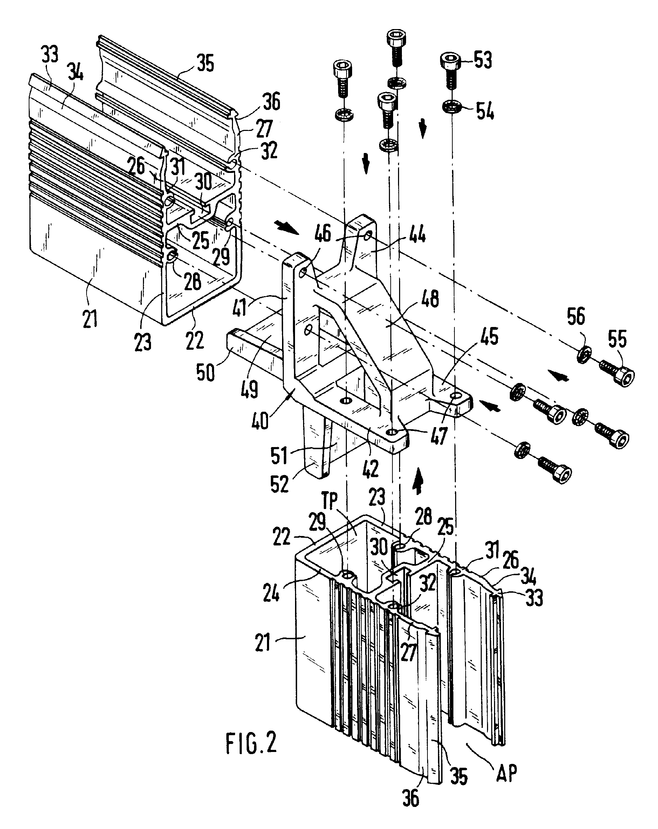

Um die Tragarmabschnitte 20 in verschiedenen Längen bereitstellen zu können, wird der Grund-Profilabschnitt 21 von einem entsprechenden Profilstrang in der erforderlichen Länge abgelängt. Der Grund-Profilabschnitt 21 ist im wesentlichen U-förmig, wobei sich an den Steg 22 die Seitenschenkelabschnitte 23 und 26 bzw. 24 und 27 anschließen, wie Fig. 2 zu entnehmen ist. Der Trennsteg 25, der parallel zum Steg 22 verläuft, unterteilt den Grund-Profilabschnitt 21 in das Tragteil TP und das Aufnahmeteil AP. Das Tragteil TP ist ein geschlossenes Hohlprofil aus dem Steg 22, den Seitenschenkelabschnitten 23 und 24 sowie dem Trennsteg 25. Das Aufnahmeteil AP wird durch den Trennsteg 25 und die Seitenschenkelabschnitte 26 und 27 gebildet. Es ist auf der dem Steg 22 abgekehrten Seite des Grund-Profilabschnittes 21 offen und dient als Aufnahme für die Verbindungsleitungen. Das Tragteil TP verleiht dem Grund-Profilabschnitt 21 eine ausgezeichnete Stabilität und das offene Aufnahmeteil AP erleichtert das Einbringen der Verbindungsleitungen. Die Seitenschenkelabschnitte 26 und 27 laufen in die Verbindungsenden 33 und 35 aus, die mit Hinterschnitten 34 und 36 versehen sind. Das Aufnahmeteil AP wird mittels des U-förmigen Deckelprofilabschnittes 37 verschlossen, dessen Seitenschenkel 38 und 38′ mit einem Einhängeansatz 39 bzw. einem Rastansatz 39′ versehen sind. Ist der Einhängeansatz 39 des Seitenschenkels 38 in den Hinterschnitt 34 des Verbindungsendes 33 des Seitenschenkelabschnittes 26 eingehängt, dann wird beim Aufrasten des Deckelprofilabschnittes 37 der Rastansatz 39′ des Seitenschenkels 38′ in den Hinterschnitt 36 im Verbindungsende 35 des Seitenschenkelabschnittes 27 einrasten. Der Deckelprofilabschnitt 37 kann aber durch Aufheben dieser Rastverbindung leicht wieder von dem Aufnahmeteil AP des Grund-Profilabschnittes 21 gelöst werden.

Die Verbindungsenden 33 und 35 sind gegenüber den Seitenschenkelabschnitten 26 und 27 so weit nach innen versetzt, daß der Deckelprofilabschnitt 37 mit den Außenwandungen seiner Seitenschenkel 38 und 38″ bündig mit den Außenwandungen der Seitenschenkelabschnitte 26 und 27 abschließt. Die Hinterschnitte 34 und 36 sind längsgerichtet und durchgehend. Der Deckelprofilabschnitt 37 hat ebenfalls einen längsgerichteten und durchgehenden Einhängeansatz 39 bzw. Rastansatz 39′.

An den Innenwandungen der Seitenschenkelabschnitte 23, 24, 26 und 27 sind längsgerichtete, durchgehende Verbindungsstege 28, 29, 31 und 32 mit Schraubaufnahmen angeformt. Die Schraubaufnahmen sind mittels durchgehender Schlitze geöffnet, so daß sie leicht entformt werden können. Die Breite der Schlitze ist so, daß sich die Schraubaufnahme über mehr als 180° ihres Umfanges, vorzugsweise über etwa 270°, erstreckt. Die Schlitze erleichtern das Herstellen des Grund-Profilabschnittes 21 im Strangpreßverfahren. Die Paare der Verbindungsstege 28 und 29 bzw. 31 und 32 im Tragteil TP bzw. Aufnahmeteil AP sind an den einander gegenüberliegenden Innenwandungen der Seitenschenkelabschnitte 23 und 24 bzw. 26 und 27 paarweise aufeinander ausgerichtet, und die Mittellängsachsen der Schraubaufnahmen haben etwa gleichen Abstand zum Trennsteg 25. Mit Hilfe der Schraubaufnahmen läßt sich in einfacher Weise an die Stirnseiten des Grund-Profilabschnittes 21 ein weiteres Teil der Aufhängevorrichtung anschrauben.

Bei der Eckverbindung von zwei Tragarmabschnitten 20 werden die Grund-Profilabschnitte 21 so angeordnet, daß die Aufnahmeteile AP auf der stumpfen Seite der Ecke liegen, wie Fig. 2 zeigt. Die Verschraubung erfolgt über den Eckverbinder 40, der zwei im rechten Winkel zueinander stehende Befestigungsplatten aufweist. Diese Befestigungsplatten sind nur noch schmale Befestigungsschenkel 41 und 42 bzw. 44 und 45, da die Befestigungsplatten unter der Verbindungsbrücke 48 ausgespart sind. Die Befestigungsschenkel 41, 42, 44 und 45 tragen Bohrungen 46 und 47, die in der Anordnung auf die Anordnung und Verteilung der Schraubaufnahmen der Verbindungsstege 28, 29, 31 und 32 der Grund-Profilabschnitte 21 abgestimmt sind. Die Befestigungsschenkel 41, 42, 44 und 45 sind in dem über die Verbindungsbrücke 48 hinausragenden Teil ausgespart, sodaß nach dem Verschrauben mit den Grund-Profilabschnitten 21 die Verbindungsleitungen aus dem Aufnahmeteil AP des einen Grund-Profilabschnittes 21 auf die Verbindungsbrücke 48 gelegt und direkt in das Aufnahmeteil des anderen Grund-Profilabschnittes 21 geführt werden können. Die Verbindungsbrücke 48 fluchtet bei der hergestellten Eckverbindung mit den Trennstegen 25 der angrenzenden Grund-Profilabschnitte 21.

Auf der stumpfen Seite der rechtwinktig zueinander stehenden Befestigungsptatten sind die senkrecht zueinander und parallel zu den Befestigungsplatten ausgerichteten Führungsplatten 49 und 51 an dem Eckverbinder 40 angeformt. Die Seiten dieser Führungsplatten 49 und 51 tragen Abkantungen 50 und 52. Die Führungsplatten 49 und 51 werden in die Tragteile TP der Grund-Profilabschnitte 21 eingeführt, wobei sie sich auf den Innenwandungen der Stege 22 abstützen, während die Abkantungen 50 und 52 sich an die Innenwandungen der Seitenschenketabschnitte 23 und 24 anlegen. Mit den Schrauben 53 und 55 wird unter Zwischenlage der Scheiben 54 und 56 der Eckverbinder 40 über die Bohrungen 46 und 47 mit den Schraubaufnahmen der Verbindungsstege 28, 29, 31 und 32 verschraubt. Die Verbindungsbrücke 46 versteift den Eckverbinder 40, läßt aber über die Aussparungen in den Befestigungsplatten eine Einfädelung von Verbindungsleitungen aus den Tragteilen TP der Tragarmabschnitte 20 zu. Der Eckverbinder 40 wird vorzugsweise als Metall-Gußteil oder Metall-Spritzgußteil hergestellt. Die beiden Grund-Profilabschnitte 21 sind starr miteinander verbunden, so daß die Eckverbindung hohe Belastung abfangen kann.

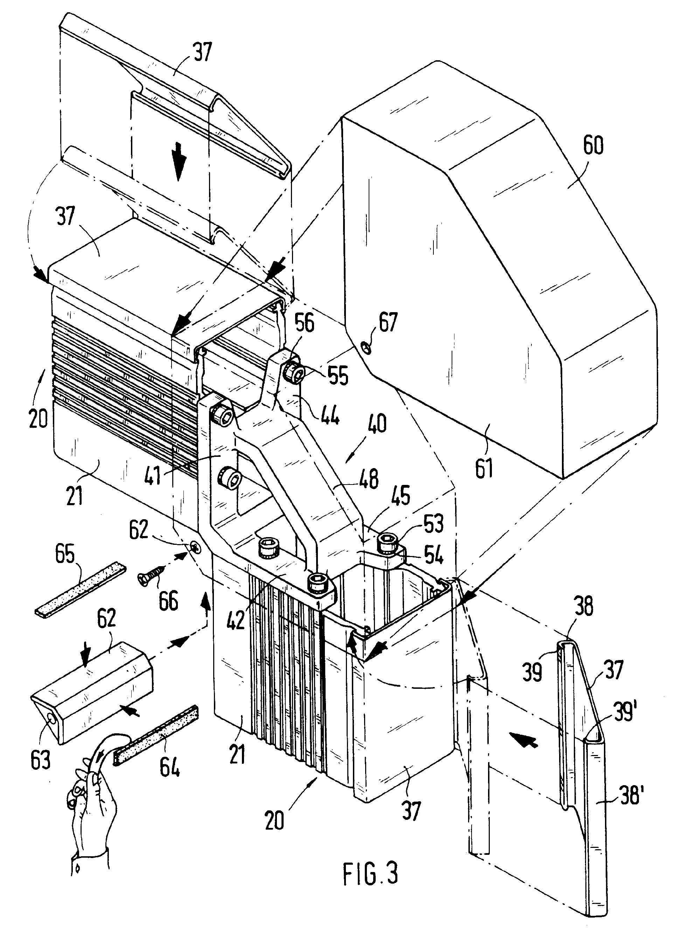

Sind die Grund-Profilabschnitte 21 über den Eckverbinder 40 miteinander verbunden, dann wird nach dem Einbringen der Verbindungsleitungen die Eckverbindung mittels der Abdeckkappe 60 verschlossen, wie Fig. 3 zeigt. Zuerst werden die Aufnahmeteile AP der Grund-Profilabschnitte 21 mittels U-förmiger Deckelprofilabschnitte 37 verschlossen. Die Seitenschenkel 38 und 38′ der Deckelprofilabschnitte 37 tragen den Einhängeansatz 39 und den Rastansatz 39′. Zuerst wird der Einhängeansatz 39 in der Hinterschnitt 34 oder 36 des Verbindungsendes 33 oder 35 eingehängt und dann der Deckelprofilabschnitt 37 aufgerastet, wobei der Rastansatz 39′ in den Hinterschnitt 36 oder 34 einrastet. Sind die Grund-Profilabschnitte 21 mit den Deckelprofilabschnitten 37 abgedeckt, dann wird von der stumpfen Seite der Ecke aus die Abdeckkappe 60 auf die Eckverbindung aufgeschoben. Die Seitenwände 61 der Abdeckkappe 60 tragen Bohrungen 67 für Befestigungsschrauben 66, die in die Schraubaufnahmen 63 der Stirnseiten der Verbindungsleiste 62 eingeschraubt werden. Die Verbindungsleiste 62 stützt sich auf den Außenwandungen der Stege 22 der Grund-Profilabschnitte 21 ab. Die Anlageflächen werden vorher mit Dichtungsstreifen 64 und 65 belegt, die eine Klebschicht aufweisen, welche nach Abzug einer Deckfolie freigelegt wird. Die Verbindungsleiste 62 stützt sich zudem an der abgeschrägten Kante des Eckverbinders 40 ab. Die Abdeckkappe 60 überdeckt die Deckelprofilabschnitte 37 und die Außenwandungen der Seitenschenkelabschnitte 23, 24, 26 und 27 teilweise, so daß die Deckelprofilabschnitte 37 an den Grund-Profilabschnitten 21 zusätzlich gehalten sind. Ist die Abdeckkappe 60 mit der Verbindungsleiste 62 verbunden, dann ist auch die Abdeckkappe 60 an der Eckverbindung gehalten. Die über die Verbindungsbrücke 48 geführten Verbindungsleitungen haben genügend Platz in der Abdeckkappe 60 und sind geschützt abgedeckt. Der Trennsteg 25 trägt dem Aufnahmeteil AP zugekehrt die T-Nut 30, die Befestigungselemente zum Festlegen der Verbindungsleitungen aufnehmen kann.

**Patentansprüche**

1. Aufhängevorrichtung für Steuergeräte, die aus einem mit einer Wand oder einem Maschinenkörper verbindbaren Anschlußflansch (18) oder Anschlußdrehgelenk, Tragarmabschnitten (20), Winkeln (14), Zwischengelenken (11) und einer mit dem Steuergerät (17) verbindbaren Kupplung (15) zusammensetzbar ist, bei der die Tragarmabschnitte (20) aus einem im wesentlichen U-förmigen Grund-Profilabschnitt (21) und einem diesen verschließenden Deckelprofilabschnitt (37) bestehen, wobei der Grund-Profilabschnitt (21) mittels eines zu seinem Steg (22) parallel verlaufenden Trennsteges (25) in ein als geschlossenes Hohlprofil ausgebildetes Tragteil (TP) und ein dem Steg (22) abgekehrt offenes U-förmiges Aufnahmeteil (AP) unterteilt ist, und bei der im Tragteil (TP) und im Aufnahmeteil (AP) längsgerichtete, durchgehende Verbindungsstege (28,29, 31,32) mit Schraubaufnahmen angeformt sind,
dadurch gekennzeichnet,
daß die Winkel (14) aus einem Eckverbinder (40) und einer Abdeckkappe (60) bestehen,
daß der Eckverbinder (40) zwei im rechten Winkel zueinander stehende Befestigungsplatten mit Befestigungsschenkeln (41,42; 44,45) aufweist, die durch die auf den Stirnflächen der Seitenschenkel (23,24 26,27) der Tragarmabschnitte (20) aufliegenden Randbereichen, der Befestigungsplatten gebildet werden und die auf der Seite, auf der die Befestigungsplatten einen rechten Winkel einschließen, mittels einer geneigten Verbindungsbrücke (48) gegeneinander versteift sind,
daß die Befestigungsschenkel (41,42; 44,45) jeweils auf der der Verbindungsbrücke (48) abgekehrten Seite mittels Schrauben (53,55) mit den den Schraubaufnahmen der Verbindungsstege (28,29, 31,32) eines Tragarmabschnittes (20) verbunden sind,
daß auf den den Tragarmabschnitten (20) zugekehrten Seiten der Befestigungsplatten Führungsplatten (49,51) senkecht abstehend angeformt sind, die in die Tragteile (TP) der Tragarmabschnitte (20) einführbar sind und sich an den Innenseiten des Steges (22) der Grund-Profilabschnitte (21) abstützen,
daß die Befestigungsplatten zumindest im Bereich des Aufnahmeteiles (AP) zwischen den Befestigungsschenkeln (41,42; 44,45) ausgespart sind,
daß eine Abdeckkappe (60) mit Seitenwänden (61) den Winkel (14) auf der Seite der Verbindungsbrücke (48) abdeckt und teilweise die Seitenschenkel (23,24, 26,27) der Tragarmabschnitte (20) sowie mit den Tragarmschnitten (20) verbundene, das Aufnahmeteil (AP) verschließende Deckelprofilabschnitte (37) überdeckt und daß eine die Seitenwände (61) der Abdeckkappe (60) verbindende Verbindungsleiste (62) in dem Bereich, in dem die Tragarmabschnitte (20) einen rechten Winkel einschließen, die Abdeckkappe (60) am Winkel (14) festlegt.

2. Aufhängevorrichtung nach Anspruch 1,
dadurch gekennzeichnet,
daß die Verbindungsbrücke (48) im mittleren Bereich nur über einen Teil der Breite der Befestigungsplatten erstreckt und
daß die Befestigungsplatten in den von der Verbindungsbrücke (48) überdeckten mittleren Bereichen so ausgespart sind, daß seitlich der Verbindungsbrücke (48) lediglich die Befestigungsschenkel (41,42; 44,45) mit Befestigungsbohrungen (46,47) für Schrauben (53,55) mit der Verbindungsbrücke (48) in Verbindung stehen.

3. Aufhängevorrichtung nach Anspruch 2,
dadurch gekennzeichnet,
daß die Verbindungsbrücke (48) im Bereich der Befestigungsplatten mit den Stirnseiten der Trennstege (25) der senkrecht zueinander stehenden, mit dem Eckverbinder (40) verbundenen Grund-Profilabschnitte (21) fluchtet.

4. Aufhängevorrichtung nach einem der Ansprüche 1 bis 3,

dadurch gekennzeichnet,

daß die Führungsplatten (49,51) mit seitenlichen Abkantungen (50,52) versehen sind, die sich an die Innenwandungen der Seitenschenkelabschnitte (23,24) der Tragteile (TP) anlegen.

5. Aufhängevorrichtung nach einem der Ansprüche 1 bis 4,

dadurch gekennzeichnet,

daß die Verbindungsleite (62) sich auf der Seite der Eckverbindung, auf der die Tragarmabschnitte einen rechten Winkel einschließen, unter Zwischenlage von Dichtungstreifen (64,65) mit Anlageflächen an die Außenwändungen der Stege (22) der Tragteile (TP) der Grund-Profilabschnitte (21) und mit einer abgeflaschten Kante an eine abgeschrägte Kante des Eckverbinders (40) anlegt,

daß die Abdeckkappe (60) in den Seitenwänden (61) mit Bohrungen (67) und die Stirnseite der Verbindungsleiste (62) mit Schraubaufnahmen (63) versehen sind, und

daß mittels Schrauben (66) die Seitenwände (61) der Abdeckkappe (60) mit den Stirnseiten der Verbindungsleiste (62) verschraubt sind.

6. Aufhängevorrichtung nach einem der Ansprüche 1 bis 5,

dadurch gekennzeichnet,

daß die Verbindungsstege (28,29; 31,32) paarweise und aufeinander ausgerichtet an den einander gegenüberliegenden Innenwandungen der Seitenschenkelabschnitte (23,24, 26,27) von Tragteil (TP) und Aufnahmeteil (AP) der Grund-Profilabschnitte (21) etwa in gleichem Abstand von dem Trennsteg (25) angeordnet sind, und

daß die Bohrungen (46,47) in den Befestigungsschenkeln (41,42, 44,45) der Befestigungsplatten des Eckverbinders (40) auf diese Anordnung und Verteilung der Verbindungsstege (28,29; 31,32) abgestimmt sind.

7. Aufhängevorrichtung nach einem der Ansprüche 1 bis 3,

dadurch gekennzeichnet,

daß der Eckverbinder (40) als Metall-Gußteil oder Metall-Spritzgußteil hergestellt ist.

## Claims

1. Suspension arm device for control apparatuses which is composed of a bracket (18) or hinged bracket connecting it with a wall (panel) or a machine element, suspension arm sections (20), elbows (14), intermediate links (11) and a coupling element (15) to be connected with the control apparatus (17), whereby the suspension arm sections (20) are made of a basicly U-shaped base beam section (21) and a cover sheet (37) covering it, whereby by means of a web (25) located parallel to its web (22), the base beam section (21) is divided into a supporting element shaped as closed hollow (TP) and a U-shaped locating element (AP) open towards the web (22), and whereby the supporting element (TP) and the locating element (AP) are provided with longitudinal, continuous connecting webs (28,29 31,32) with screw openings,

characterized thereby,

that the elbows (14) comprise a corner connecting piece (40) and a cover (60),

that the corner connecting piece (40) is provided with two fastening plates with fastening legs (41,42;44,45) rectangular to each other, which are shaped by the lateral sides of the fastening plates lying on the faces of the lateral legs (23,24 26,27) of the suspension arm sections (20), and which are mutually strengthened by means of an inclined connecting bridge (48) on that side where the fastening plates form a square angle,

that on the side opposite to the connecting bridge (48) the fastening legs (41,42; 44,45) are joint by means of screws (53,55) with the screw openings of the connecting webs (28,29,31,32) of a suspension arm section (20), that on the fastening-plates sides facing the suspension arm sections (20) vertical guiding plates (49,51) are provided, which can be introduced into the supporting elements (TP) of the suspension arm sections (20) and lying on the inner sides of the web (22) of the base beam sections (21),

that the fastening plates are recessed at least in the locating element area (AP) between the fastening legs (41,42;44,45),

that a cover (60) with side panels (61) covers the elbow (14) at the connecting bridge side (48) as well as partially the legs (23,24;26,27) of the suspension arm sections (20), overlapping also cover sections (37) connected with the suspension arm sections (20) covering the locating element (AP),

that a cover strip (62) joining the side panels (61) of the cover (60) fixes the cover (60) on the elbow (14) in the suspension-arm sections (20) square area.

2. Suspension arm device according to claim 1,

characterized thereby,

that the connecting bridge (48) in the center area extends only partially over the width of the fastening plates and

that the fastening plates, in their center areas covered by the connecting bridge (48) are provided with openings so that laterally to the connecting bridge (48) only the fastening webs (41,42; 44,45) with fastening openings (46,47) for screws (53,55) are connected with the bridge (48).

3. Suspension arm device according to claim 2,
characterized thereby,
that the connecting bridge (48) in the fastening-plates area is in alignment with the faces of the webs (25) of the vertical base-beam sections (21) linked with the corner connecting piece (40).

4. Suspension arm device according to one of the claims 1 to 3,
characterized thereby,
that the guiding plates (49,51) are provided with lateral borders (50,52) lying on the inner sides of the legs (23,24) of the supporting elements (TP).

5. Suspension arm device according to one of the claims 1 to 4,
characterized thereby,
that on the corner connection side shaping a right angle with the suspension-arm sections, the connecting strip (62) provided with sealing strips (64,65) is lying with its resting surfaces on the outer sides of the supporting-element (TP) webs (22) of the base beam sections (21) and with its flat edge on the inclined edge of the corner connecting piece (40),
that the lateral panels (61) of the cover (60) are provided with threads (67) and the face of the connecting strip (62) is provided with screw openings (63), and
that the side panels (61) of the cover (60) are screwed with the connecting-strip faces (62) by means of screws (66).

6. Suspension arm device according to one of the claims 1 to 5,
characterized thereby,
that the connecting webs (28,29; 31,32) are in pairs and directed to one another located on the inner sides opposite to each other, of the legs (23,24, 26,27) of the supporting element (TP) and locating element (AP) of the base beam sections (21) approximately at the same distance from the web (25), and
that the threads (46,47) located in the fastening webs (41,42, 44,45) of the corner-piece (40) fastening plates are matched in respect of this arrangement and distribution of the connecting webs (28,29; 31,32).

7. Suspension arm device according to one of the claims 1 to 6,
characterized thereby,
that the corner connecting piece (40) is fabricated as cast metal part or injection moulded metal part.


## Revendications

1. Dispositif de suspension pour appareils de commande, qui sont. composés d'une bride de raccord (18) ou d'une articulation de raccord pouvant être raccordée à un carter de machine, de tronçons de bras de support (20), de coudes (14), d'articulations intermédiaires (11) et d'un accouplement (15) pouvant être raccordé à l'appareil de commande (17), dispositif de suspension dans lequel les tronçons de bras de support (20) sont constitués par un tronçon de profilé de base en substance en forme de U ( 21) et par un tronçon de profilé de recouvrement (37) venant clôturer le profilé de base, le tronçon de profilé de base (21) étant, au moyen d'une âme de séparation (25) orientée parallèlement à son dos (22), subdivisé en un élément de support (TP) ayant la forme d'un profilé creux et en un élément récepteur (AP) en forme de U ouvert éloigné du dos (22), des nervures de liaison continues (28, 29, 31, 32) avec des forures pour des vis , dirigées longitudinalement, étant formées dans l'élément de support (TP) et dans l'élément récepteur (AP),
caractérisé en ce que
les coudes (14) sont composés d'une cornière d'angle (40) et d'un capuchon de recouvrement (60)
en ce que la cornière d'angle (40) présente deux plaques de fixation formant entre elles un angle droit, avec des ailes de fixation (41,42; 44, 45), qui sont constituées par les zones marginales des plaques de fixation s'appliquant sur les faces frontales des ailes latérales (23, 24, 26, 27) des tronçons de bras de support (20) et qui du côté où les plaques de support forment un angle droit sont raidis l'un vis-à-vis de l'autre au moyen d'un pont de liaison (48) incliné,
en ce que les ailes de fixation (41, 42; 44, 45) sont chacune, du côté opposé au pont de liaison (48), reliées au moyen de vis (53, 55) avec les forures pour vis des nervures de liaison (28, 29 31, 32) d'un tronçon de bras de support (20),
en ce que sur les côtés des plaques de fixation faisant face aux tronçons de bras de support (20) sont. formées des plaques de guidage (49, 51) issues verticalement, qui peuvent être introduites dans les éléments de support (TP) des tronçons de bras de support (20) et qui s'appliquent contre les faces intérieures du dos (22) des tronçons de profilé de base (21) en ce que tout au moins dans la région de l'élément récepteur (AP), les plaques de fixation sont évidées entre les ailes de fixation(41, 42; 44,45),

en ce qu'un capuchon de recouvrement (60) avec des parois latérales (61) recouvre le coude (14) du côté du pont de liaison (48) et recouvre partiellement les ailes latérales (23, 24, 26, 27) des tronçons de bras de support (20) ainsi que des tronçons de profilé de recouvrement (37) reliés aux tronçons de bras de support (20) et clôturant l'élément récepteur (AP) et

en ce qu'une latte de liaison (62) reliant les parois latérales (61) du capuchon de recouvrement (60) assujettit le capuchon de recouvrement (60) sur le coude (14) dans la région où les tronçons de bras de support (20) forment un angle droit.

2. Dispositif de fixation suivant la revendication 1,
caractérisé en ce que

le pont de liaison (48), dans la région médiane, ne s'étend qu'au-dessus d'une partie de la largeur des plaques de fixation et

en ce que les plaques de fixation, dans les régions médianes recouvertes par le pont de liaison (40), sont évidées de manière telle que latéralement du pont de liaison (48) seuls sont en liaison avec le pont de liaison (48) les ailes de fixation (41,42; 44, 45) avec des forures (46, 47) pour des vis (53, 55).

3. Dispositif de fixation suivant la revendication 2,
caractérisé en ce que

le pont de liaison (48) est, dans la région des plaques de fixation, en alignement avec les faces frontales des âmes de séparation (25) des tronçons de profilé de base (21) qui sont perpendiculaires l'un à l'autre et qui sont reliés à la cornière d'angle (40).

4. Dispositif de suspension suivant l'une quelconque des revendications de 1 à 3,
caractérisé en ce que

les plaques de guidage (49, 51) sont dotées de cornières latérales (50, 52), qui s'appliquent contre les parois intérieures des tronçons d'aile latérale (23, 24) des éléments de suppoit (TP).

5. Dispositif de suspension suivant l'une quelconque des revendications de 1 à 4,
caractérisé en ce que

du côté de la cornière d'angle où les tronçons de bras de support forment un angle droit, la latte de liaison (62) est, avec interposition de bandes d'étanchéité (64, 65) avec des surfaces d'application, appliquée contre les parois extérieures des dos (22) des éléments de support (TP) des tronçons de profilé de base (21) et est, par une arête aplatie, appliquée contre une arête biseautée de la cornière d'angle (40),

en ce que le capuchon de recouvrement (60) présente des forures (67) dans les parois latérales (61) et en ce que la paroi frontale de la latte de liaison (62) présente des logements de réception de vis (63), et

en ce que les parois latérales (61) du capuchon de recouvrement (60) et les parois frontales de la latte de réunion sont réunies au moyen de vis (66).

6. Dispositif de suspension suivant l'une quelconque des revendications de 1 à 5,
caractérisé en ce que

les nervures de liaison (28, 29; 31, 32) sont disposées par paires et en alignement sur les parois intérieures se faisant face des tronçons d'aile latérale (23, 24, 26, 27) de l'élément de support (TP) et de l'élément récepteur (AP) des tronçons de profilé de base (21), sensiblement à distance égale de l'âme de séparation (25), et

en ce que les forures (46, 47) dans les ailes de fixation (41, 42, 44, 45) des plaques de fixation de la cornière d'angle (40) sont disposées en concordance avec cette disposition et cette répartition des nervures de liaison (28, 29; 31, 32).

7. Dispositif de suspension suivant l'une quelconque des revendication 1 à 6,
caractérisé en ce que

la cornière d'angle est fabriquée en métal par moulage ou par moulage par injection.

FIG.1

EP 0 330 027 B1

FIG.2

FIG.3